# EUROPÄISCHE PATENTANMELDUNG

(11) **EP 1 633 064 A2**
(43) Veröffentlichungstag der Anmeldung: **08.03.2006**
(21) Anmeldenummer: 05107524.0
(22) Anmeldetag: 30.09.1997
(51) Int. Cl.: H04J 3/06, H04L 1/16, H04L 1/18

(54) **Verfahren zur Übertragung multimedialer Daten**

(30) Priorität: 14.02.1997 DE 19705678
(62) Teilanmeldung aus: 97116920.6
(71) Anmelder: ROBERT BOSCH GMBH, 70442 Stuttgart (DE)
(72) Erfinder: Vogel, Peter, 31139, Hildesheim (DE)

(57) **Zusammenfassung**

Es wird ein Verfahren zur Übertragung von multimedialen Daten über fehlerbehaftete Kanäle vorgeschlagen, daß eine einfache, flexible und sichere Übertragung verschiedener Datenquellen in Multiplex-Paketen fester Länge ermöglicht.

## Beschreibung

### Stand der Technik

Die Erfindung geht aus von einem Verfahren zur Übertragung von Datenblöcken nach der Gattung des Hauptanspruchs.

Aus der ITU-T Draft Recommendation H.223 Annex A, 6th december 1996, "Multiplexing Protocol for Low Bitrate Mobile Multimedia Communication" ist ein Datenprotokoll bekannt, das ein Multiplexverfahren spezifiziert, mit dem digitale Informationen verschiedener Datenquellen seriell über fehlerbehaftete Kanäle übertragen werden können. In diesem Protokoll werden die Rahmenstrukturen, die Formate der Daten- und Steuerfelder und eine Struktur für die vom Multiplexer zu übertragenden Daten, das Multiplexprotokoll, festgelegt.
Das Multiplexprotokoll ermöglicht die Verarbeitung von logischen Informationen, die über die Adaptionsebene auf die Multiplexebene gelangen, in einheitliche Datenpakete.

Das Protokoll ermöglicht die Übertragung von beliebigen Kombinationen digitaler Audio- und Videodaten, sowie anderen Informationen über Datenleitung.
Es verwendet zur Rahmenerkennung ein Synchronisationsmuster vor jedem Multiplexpaket. Ihm wird ein HEADER und das Informationsfeld mit einer festen Paketlänge nachgestellt.
Die Multiplexpakete besitzen feste Längen, womit eine besonders stabile Synchronisation erreicht wird. Jedes Multiplexpaket kann ein oder mehrere Pakete der Datenquellen enthalten. Diese Pakete der Datenquellen werden mit separaten Fehlerschutzmaßnahmen geschützt. Dazu kann für jede Datenquelle ein unabhängiges Retransmission Verfahren eingesetzt werden.
Die Spezifikation mehrerer unabhängiger Retransmission Verfahren geht auf Kosten der Kanalbandbreite. Ändert sich die Zusammensetzung und damit die Länge der Datenquellen Pakete innerhalb des Multiplexpaketes, so ergeben sich Schwierigkeiten bei der Retransmission eines Datenquellen Paketes.

### Vorteile der Erfindung

Das erfindungsgemäße Verfahren mit den kennzeichnenden Merkmalen des Hauptanspruchs hat demgegenüber den Vorteil, daß verschiedene Datenquellen mit Hilfe eines flexiblen Retransmission Verfahrens geschützt werden können. Dadurch wird Bandbreite eingespart, da die für mehrere Retransmission Verfahren benötigten Steuerinformationen eingespart werden können. Das Gesamtverfahren wird stark vereinfacht, da nur noch ein Retransmission Protokoll abläuft. Außerdem ist ein flexibles Anpassen der variablen Retransmission Paketlängen an die konstante Multiplex Paketlänge möglich.

Durch die in den Unteransprüchen aufgeführten Maßnahmen sind besonders vorteilhafte Weiterbildungen und Verbesserungen des im Hauptanspruch angegebenen Verfahrens möglich. Vorteilhafterweise wird ein Retransmission Paket in unterschiedliche Schutzbereiche aufgeteilt, die bei Auftreten von Übertragungsfehlern erneut übertragen werden können. Für jeden Bereich kann dabei unabhängig entschieden werden, wie oft die wiederholte Übertragung durchgeführt werden soll.
Um eine einfache Zuordnung zu erhalten ist es vorteilhaft jeder Datenquelle einen eigenen Schutzbereich im Retransmission Paket zuzuordnen.
Die korrekte zeitliche Einordnung der einzelnen Datensegmente erfolgt über Sequenz Nummern. Dazu wird jedem Schutzbereich eine solche Nummer zugeordnet. Auf Empfängerseite werden die Segmente gemäß ihrer Nummer wieder zusammengefügt.
Vorteilhafterweise werden Retransmission Pakete durch durch ein zusätzlich eingefügtes Bitmuster voneinander getrennt, um bei Bedarf eine von den Multiplex Paketen unabhängige Synchronisation zu signalisieren. Eine besonders sichere Erkennung der Retransmission Paketgrenzen erhält man, wenn Beginn und Ende eines Paketes sowie das Auftreten der zusätzlichen Synchronisationsworte in einem Zusatzfeld, z.B. dem Multiplex HEADER, angekündigt werden.Vorteilhafter Weise wird ebenfalls signalisiert, wenn genau ein Retransmission Paket im Multiplex Paket enthalten ist. In diesem Fall ist die Signalisierung der Paketgrenzen mit Hilfe von Synchronisationsworten nicht notwendig.
Beginn und Ende eines Retransmission Paketes sowie das Auftreten der zusätzlichen Synchronisationsworte werden vorteilhafterweise mit einem Bit in einem Zusatzheader angekündigt.

### Zeichnung

Ausführungsbeispiele der Erfindung sind in den Zeichnungen dargestellt und in der nachfolgenden Beschreibung näher erläutert. Es zeigt Figur 1 den schematischen Aufbau der Struktur der Datenebenen für die Multiplexübertragung, Figur 2 den Aufbau eines Multiplex Paketes, ausgehend von den Datenquellen und Figur 3 ein Beispiel für die Segmentierung von Retransmission-Paketen.

### Beschreibung der Ausführungsbeispiele

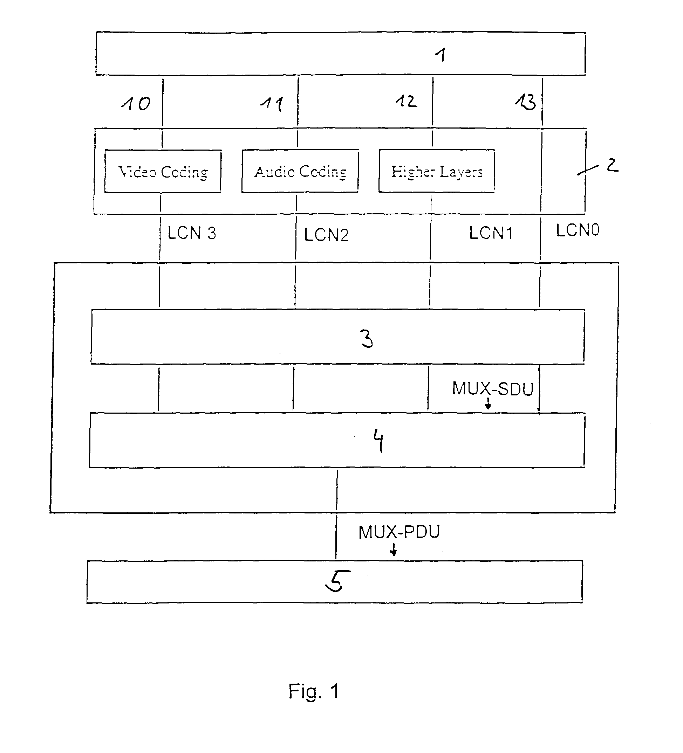

Die Datenübertragung von beliebigen Datensignalen findet nach Fig. 1 über hierarchisch gegliederte Ebenen statt. Von den einzelen Datengeräten kommen die zum Teil analogen Signale über die Anwendungsebene 1 zur Kodierungsebene 2. Nach einem Digitalisierungsschritt werden die Inhalte der logischen Kanäle LCN an die Adaptationebene 3 des Multiplexers weitergegeben. Immer noch in getrennten Kanälen werden die Daten als MUX-SDUs (Service Data Units) an die Multiplexebene 4 weitergereicht. Diese Ebene verarbeitet die Vielzahl an Kanälen zu einem Kanal und gibt MUX-PDUs (Protocol Data Units) aus. Diese Datenblöcke werden nach dem erfindungsgemäßen Protokoll mit Signalen gefüllt.

Die Erfindung geht dabei davon aus, daß Informationen verschiedener Datenquellen gemeinsam geschützt werden.
Für das gesamte Multiplex-Paket wird ein gemeinsames Retransmission-Verfahren spezifiziert.
Innerhalb des Multiplex Paketes wird eine weitere Synchronisation eingeführt, mit der die Retransmission unabhängig von den Paketgrenzen des Multiplex-Paketes durchführbar ist.

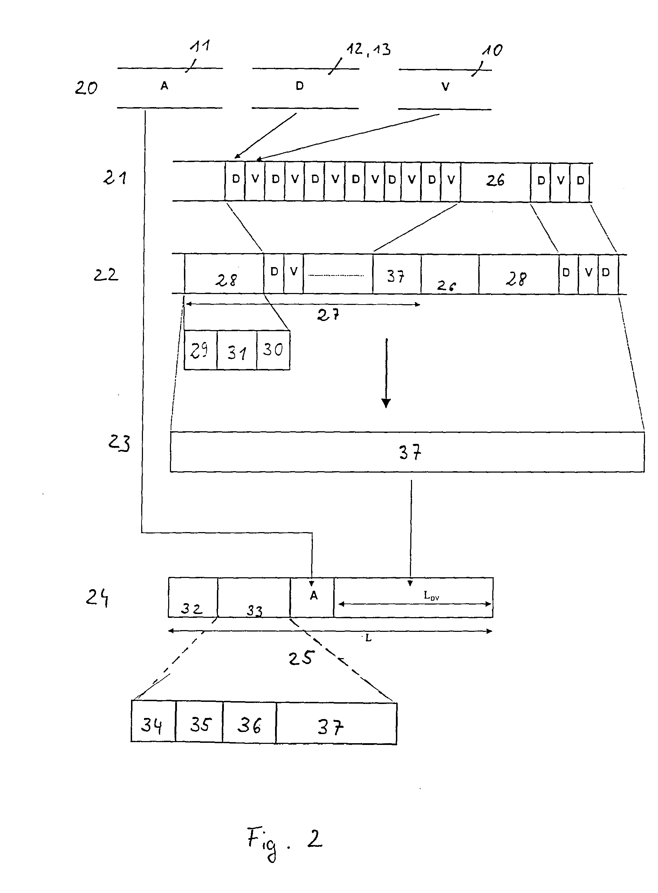

Fig. 2 stellt die Datenquellen Audio 11, Daten 12,13 und Video 10 in der Quellebene 20 dar. Darunter folgt die Quellstromebene 21 und die Retransmission-Paketebene 22. Fehlerschutzebene 23 und Multiplexebene 24 schließen den Aufbau ab.

### Grundsätzlich werden drei Quellenarten unterschieden:

Audio 11, Video 10 und Daten 12,13. Die Unterscheidung erfolgt, um unterschiedliche Anforderungen der Quelldecoder zu erfüllen. Im Prinzip könnte man allgemeiner auch von Quellel, Quelle2 und Quelle3 sprechen.
Der Multiplexcode des Standards H.223 spezifiziert in welcher Reihenfolge und in welchem Verhältnis Audio, Video und Daten in das Multiplex Paket eingebaut werden sollen. Ein typisches Beispiel ist z.B.:21 Byte Audio, anschliessend abwechselnd je ein Byte Daten und Video im Verhältnis (1:1).

Der Audio Anteil wird unverändert und unmittelbar in das Multiplex-Paket 25 der festen Länge L in der Multiplexebene 24 eingebaut. Für Daten 12,13 und Video 10 hingegen wird im folgenden ein Fehlerschutz-Protokoll definiert.

Nach Anwendung des Multiplexcodes (MC) auf Daten und Video ergibt sich das abgebildete Muster in der Quellstromebene 21. 26 symbolisiert ein zusätzlich eingefügtes Bitmuster (Synchronisationswort), das zur Signalisierung der Paketgrenzen von Retransmission-Paketen benutzt wird.

Ein bestimmte Anzahl von z Bytes wird nun diesem Quellstrom entnommen. Die genaue Anzahl wird ausgehend von der Multiplexebene 24 aus der Länge L_{DV} berechnet. Sie richtet sich nach der Länge L des Multiplex-Paketes, dem speziellen Multiplexcode und dem genauen Fehlerschutz.
Aus den z Bytes werden nun ein oder mehrere
Retransmission-Pakete 27 gebildet. Jedem Retransmission-Paket 27 wird ein Kontrollfeld 28 zugeordnet, in dem die zur Anwendung der Retransmission erforderlichen Informationen übertragen werden. Dazu gehören insbesondere zwei Sequenz-Nummern 29 und 30.
Die erste Sequenz-Nummer 29 stellt die Nummer des Retransmission-Paketes dar. Sollte das Paket fehlerhaft beim Empfänger ankommen, so wird das Retransmission-Paket mit der ersten Sequenz-Nummer 29 neu angefordert. Der Sender schickt das Paket dann noch einmal neu.
Dieser Vorgang kann mehrfach wiederholt werden, falls das Paket jeweils fehlerhaft beim Empfänger ankommt. Dieses Prinzip der Retransmission erzeugt allerdings eine Verzögerung. Der Kanal ist ja blockiert, da ständig alte Informationen wiederholt übertragen werden. Für Video-Übertragungen gibt es daher ein Limit, ab dem eine Verzögerung nicht mehr akzeptiert wird.
D.h. es gibt eine maximale Anzahl von Retransmission Versuchen. Anschliessend muß neue Information in das Paket eingefüllt werden. Für die Übertragung von Daten sind diese Anforderungen wesentlich geringer. Hier kann eine höhere Verzögerung und damit eine höhere Anzahl an Retransmission Versuchen akzeptiert werden.
Daher wird eine zweite Sequenz-Nummer 30 eingefügt. Diese Nummer bezieht sich nur auf die Daten im Retransmission Paket. Die Dateninformation eines fehlerfrei empfangenen Paketes wird gemäß der zweiten Sequnenz-Nummer weiter verarbeitet.
Die Videoinformation eines fehlerfrei empfangenen Paketes wird gemäß der Sequenz-Nummer 30 weiter verarbeitet.
Die Sequenz-Nummern 29 und 30 werden vorteilhafterweise mit einem eigenen Fehlerschutz 31 versehen.

Zur Fehlererkennung ist es besonders günstig das Retransmission-Paket 27 mit einem CRC (cyclic redundancy code) 31 zur Fehlererkennung zu versehen. Ein weiterer Fehlerschutz in Form von FEC+Interleaving ist ebenfalls denkbar.
die Sequenznummern 29 und 30 können in diesen Fehlerschutz mit einbezogen werden.

Um die Grenzen eines Retransmission Paketes zu signalisieren gibt es zwei Möglichkeiten:
a) Retransmission Paketgrenzen werden durch Multiplex-Paket-Grenzen bestimmt. Die Länge z der Quell-Information wird genau so groß gewählt, daß ein komplettes Retransmission Paket 27 mit Kontrollfeld 28, CRC 31 und zusätzlichem Fehlerschutz 37 in den zur Verfügung stehenden Platz des Multiplex-Paketes 25 paßt. In diesem Fall wird kein Synchronisationswort 26 benötigt.
b) Retransmission Paketgrenzen werden mit Hilfe des Synchronisationsworts 26 signalisiert. Wenn sich ein Retransmission-Paket 27 über mehr als ein Multiplex-Paket 25 erstrecken soll, oder wenn mehrere Retransmission-Pakete 27 in ein Multiplex-Paket 25 gefüllt werden sollen wird das Synchronisationswort 26 benutzt. In diesem Fall endet ein Retransmission-Paket 27 mit dem Start des Synchronisationsworts 26. Anschliessend beginnt ein neues Retransmission-Paket 27.

Das PM Feld im HEADER des Multiplex Paketes signalisiert, welche der beiden Möglichkeiten im aktuellen Multiplex Paket gewählt wird.
Die in der Retransmission-Paketebene 22 gebildeten Retransmission-Pakete 27 können in der Fehlerschutzebene 23 noch mit einem zusätzlichen Fehlerschutz versehen werden (FEC, Interleaving).
Die Multiplexebene 24 zeigt die codierten Multiplex-Pakete 25 fester Länge L. Der Beginn eines Paketes wird durch das Synchronisationswort SYNC 32 signalisiert. Anschliessend folgt der HEADER 33. Er besteht aus dem Multiplexcode (MC) 34, einem Header Counter (HC) 35 und einem Packet Marker (PM) 36, sowie einem Fehlerschutz 37.
Über den Packet Marker 36 wird signalisiert, wie die Grenzen der Retransmission-Pakete 27 zu erkennen sind.

Es ist ebenfalls denkbar den Packet-Marker 36 unabhängig vom HEADER 33 zu übertragen. Folgende Realisierungen des Packet Markers 36 sind besonders vorteilhaft:

### 1-Bit-Realisierung

Das PM bit gibt an, ob genau ein Retransmission-Paket 27 im Multiplex-Paket 25 enthalten ist (PM=1), oder ob mehrere Retransmission-Pakete 27, oder nur ein Teil eines Retransmission-Paketes im Multiplex-Paket 25 enthalten ist (PM = 0).
Im ersten Fall (PM=1) sind die Grenzen des Retransmission-Paketes durch die Grenzen des Multiplex-Paketes vorgegeben. Im zweiten Fall (PM=0) werden die Grenzen des Retransmission-Paketes mit Hilfe der Synchronisationsworte 26 signalisiert.
Das PM bit gibt lediglich an, daß sich ein Synchronisationswort 26, oder ein Teil davon, im Multiplex-Paket 25 befindet. Jede weitere Signalisierung der Segmentierung wird in anderen Feldern vorgenommen.

### 2-Bit-Realisierung

Das PM Feld besteht aus 2 bit:
F-bit: Signalisiert, daß ein Synchronisationswort 26 im Quellstrom des aktuellen Multiplex-Paket 25 vorhanden ist.
E-bit: Signalisiert, daß das letzte Retransmission-Paket 27 im aktuellen Multiplex-Paket endet.

Für eine korrekte Verarbeitung der Retransmission Paketgrenzen ist dabei erfoderlich, daß die Grenzen des letzten Retransmission-Paketes im vorhergehenden Multiplex-Paketes fehlerfrei empfangen wurden. Nur so läßt sich feststellen, ob das erste Retransmission-Paket im aktuellen Multiplex-Paket startet, oder ob eine Fortsetzung aus dem letzten Multiplex-Paket vorliegt).

### 3-Bit-Realisierung

Das PM Feld besteht aus 3 bit:
F-bit: Signalisiert, daß ein Synchronisationswort 26 im Quellstrom des aktuellen Multiplex-Paket 25 vorhanden ist.
S-bit: Signalisiert, daß das **erste** Retransmission-Paket 27 im aktuellen Multiplex-Paket 25 **startet**.
E-bit: Signalisiert, daß das **letzte** Retransmission-Paket 27 im aktuellen Multiplex-Paket 25 **endet**.

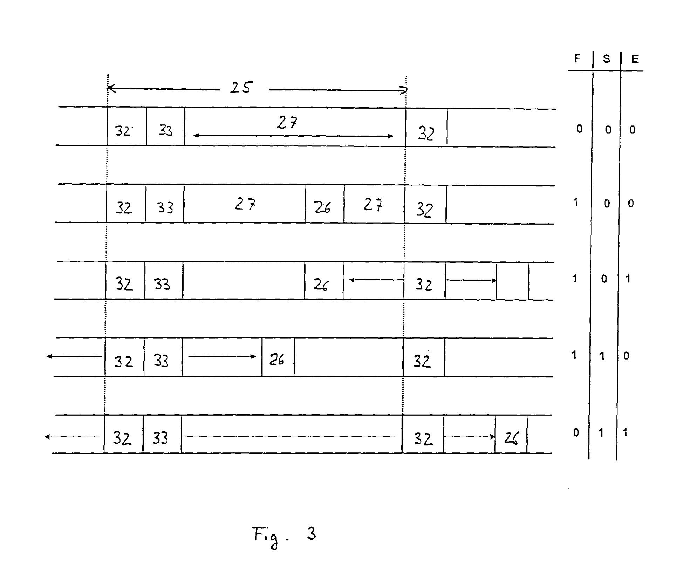

Fig. 3 zeigt einige Beispiele. Die Skizze ist nur symbolhaft zu verstehen: Der Fehlerschutz wurde dabei außer acht gelassen, so daß unmittelbar die Retransmission-Pakete 27 innerhalb des Multiplex-Paketes 25 betrachtet werden können. Dabei wird vereinfachend angenommen, daß das Multiplex-Paket 25 nur aus den Retransmission-Paketen 27 besteht. In den drei unteren Beispielen ist das Retransmission-Paket 27 über mehr als ein Multiplex-Paket 25 angeordnet. Falls zusätzlich Audio Information 11 im Multiplex Paket übertragen werden soll, so verringert sich der Platz für die Retransmission Pakete.

Die Erfindung stellt ein einfaches, robustes und trotzdem flexibles Retransmission Verfahren für multimediale Anwendungen dar.
Das Verfahren hat den Vorteil, daß verschiedene Datenquellen mit Hilfe eines flexiblen Retransmission Verfahrens geschützt werden können. Dadurch wird Bandbreite eingespart, da die für mehrere Retransmission Verfahren benötigten Steuerinformationen eingespart werden können. Das Gesamtverfahren wird stark vereinfacht, da nur noch ein Retransmission Protokoll abläuft. Außerdem ist durch die Einführung einer Zusatzsynchronisation innerhalb der Multiplexpakete ein flexibles Anpassen der variablen Retransmission-Paketlängen an die konstante Multiplex Paketlänge möglich.

## Patentansprüche

1. Verfahren zur Datenübertragung von Multiplexpaketen (25) zwischen zwei Stationen, wobei die Multiplexpakete (25) ein Synchronisationsmuster (32), einen HEADER (33) und ein aus verschiedenen Datenquellen bestehendes Informations-Feld aufweisen, wobei das Synchronisationsmuster (32) den Beginn des Multiplexpaketes (25) anzeigt und der HEADER (33) Aussagen über die genaue Aufteilung des Informations-Feldes für die verschiedenen Datenquellen (10, 11, 12, 13) enthält, **dadurch gekennzeichnet, daß** die Multiplexpakete (25) mit einem Retransmission-Verfahren gegen Übertragungsfehler geschützt werden.

2. Verfahren zur Datenübertragung von Multiplexpaketen zwischen zwei Stationen nach Anspruch 1, **dadurch gekennzeichnet, daß** Schutzbereiche (V, D) innerhalb eines Retransmission-Paketes (27) unterschieden werden, für die unterschiedliche maximale Retransmission-Versuche erlaubt sind.

3. Verfahren zur Datenübertragung von Multiplexpaketen zwischen zwei Stationen nach Anspruch 1 oder 2, **dadurch gekennzeichnet, daß** jeder der Schutzbereiche die Informationen einer definierten Datenquelle (10, 12, 13) enthält.

4. Verfahren zur Datenübertragung von Multiplexpaketen zwischen zwei Stationen nach Anspruch 1 bis 3, **dadurch gekennzeichnet, daß** die unterschiedlichen Schutzbereiche eigene Sequenz-Nummern (29, 30) erhalten, die auf Empfängerseite die korrekte zeitliche Einordnung der einzelnen Schutzbereiche ermöglichen.

5. Verfahren zur Datenübertragung von Multiplexpaketen zwischen zwei Stationen nach Anspruch 1 bis 4, **dadurch gekennzeichnet, daß** die Grenzen des Retransmission-Pakets (27)mit zusätzlichen Synchronisationsworten (26) signalisiert werden.

6. Verfahren zur Datenübertragung von Multiplexpaketen zwischen zwei Stationen nach Anspruch 1 bis 5, **dadurch gekennzeichnet, daß** die Grenzen des Retransmission-Pakets (27) nur dann mit zusätzlichen Synchronisationsworten (26) signalisiert werden, falls sie nicht mit den Grenzen des Multiplexpaketes (25) übereinstimmen.

7. Verfahren zur Datenübertragung von Multiplexpaketen zwischen zwei Stationen nach Anspruch 1 bis 6, **dadurch gekennzeichnet, daß** die Grenzen des Retransmission-Paketes (27)in einem zusätzlichen Kontrollfeld (36), vorzugsweise im Multiplex-Header (33), angekündigt werden.

8. Verfahren zur Datenübertragung von Multiplexpaketen zwischen zwei Stationen nach Anspruch 1 bis 7, **dadurch gekennzeichnet, daß** das Auftreten der Synchronisationsworte (26) in einem zusätzlichen Kontrollfeld (36), vorzugsweise im Multiplex Header (33) angekündigt wird.

9. Verfahren zur Datenübertragung von Multiplexpaketen zwischen zwei Stationen nach Anspruch 1 bis 8, **dadurch gekennzeichnet, daß** mit Hilfe eines Bits in einem zusätzlichen Kontrollfeld (36) angezeigt wird, vorzugsweise im Multiplex Header, daß das aktuelle Multiplex-Paket (25) genau ein komplettes Retransmission-Paket (27) ohne Synchronistaionsworte (26) enthält.

10. Verfahren zur Datenübertragung von Multiplexpaketen zwischen zwei Stationen nach Anspruch 1 bis 8, **dadurch gekennzeichnet, daß** mit Hilfe eines Bits in einem zusätzlichen Kontrollfeld (36) angezeigt wird, vorzugsweise im Multiplex Header, daß das aktuelle Multiplex-Paket (25) mindestens ein Synchronisationswort (26) zur unabhängigen Segmentierung der Retransmission-Pakete (27) enthält.

11. Verfahren zur Datenübertragung von Multiplexpaketen zwischen zwei Stationen nach Anspruch 1-8, **dadurch gekennzeichnet, daß** mit Hilfe eines Bits in einem zusätzlichen Kontrollfeld (36) angezeigt wird, vorzugsweise im Multiplex Header, daß der Start eines Retransmission-Paketes (27) im aktuellen Multiplex-Paket (25) liegt.

12. Verfahren zur Datenübertragung von Multiplexpaketen zwischen zwei Stationen nach Anspruch 1 bis 8, **dadurch gekennzeichnet, daß** mit Hilfe eines Bits in einem zusätzlichen Kontrollfeld (36) angezeigt wird, vorzugsweise im Multiplex Header (33), daß das Ende eines Retransmission-Paketes (27) im aktuellen Multiplex-Paket (25) liegt.
